Europäisches Patentamt

European Patent Office

Office européen des brevets

(11) Veröffentlichungsnummer: **0 385 484**
**A1**

(12) **EUROPÄISCHE PATENTANMELDUNG**

(21) Anmeldenummer: **90104042.8**

(22) Anmeldetag: **02.03.90**

(51) Int. Cl.5: **C03C 19/00, B24C 1/06**

(30) Priorität: **02.03.89 CS 1329/89**

(43) Veröffentlichungstag der Anmeldung:
**05.09.90 Patentblatt 90/36**

(84) Benannte Vertragsstaaten:
**AT BE DE ES FR GB GR IT NL SE**

(71) Anmelder: **OSVETLOVACI SKLO, STATNI PODNIK**

**Valasské Mezirici(CS)**

(72) Erfinder: **Hlavsa, Josef, Dipl. Ing.**
**Ruzová 153**
**Valasské Mezirici(CS)**

(74) Vertreter: **Patentanwälte Beetz sen. - Beetz jun. Timpe - Siegfried - Schmitt-Fumian- Mayr**
**Steinsdorfstrasse 10**
**D-8000 München 22(DE)**

(54) **Verfahren zum Mattieren von Glasgegenständen, insbesondere für Beleuchtungszwecke.**

(57) Gegenstand der Erfindung ist ein Verfahren zum Mattieren von Glasgegenständen, bei dem eine wäßrige Suspension eines feinkörnigen Abrasionsmittels gegen die Oberfläche des mattierten Glasgegenstandes unter einem Druck von 20 bis 400 MPa aufgestrahlt wird.

EP 0 385 484 A1

## Verfahren zum Mattieren von Glasgegenständen, insbesondere für Beleuchtungszwecke

Die Erfindung betrifft ein Verfahren zum Mattieren von Glasgegenständen, insbesondere von Glas für Beleuchtungszwecke. Bei diesem Verfahren wird auf die Oberfläche des Glasgegenstands mittels eines Abrasionsmittels eingewirkt, welches unter Druck zugeführt wird.

Verschiedene Glaserzeugnisse werden ganz oder teilweise mattiert, um beispielsweise bei Leuchten die Lichtstreuung zu verbessern oder bei Nutzglas dekorative Effekte zu erzielen. Das Oberflächenmattieren wird chemisch durch Reaktion der Fluorwasserstoffsäure oder saurer Fluoride oder mechanisch durch Anstrahlen mit einem abrasiven Pulver und Druckluft durchgeführt.

Beim chemischen Mattieren wird das Glas in Bäder eingetaucht oder auf die Oberflächen werden ein Mattierschaum oder eine Badflüssigkeit aufgetragen. Bei allen Verfahren ist die Bedienung den hochtoxischen Fluordämpfen ausgesetzt. Um das Gesundheitsrisiko herabzusetzen, wurden automatische Mattieranlagen entwickelt, bei denen alle Handhabungsvorgänge der Erzeugnisse außerhalb der Anlage vorgenommen werden. Auch bei dieser Technologie ist die Konzentration der Fluordämpfe in der Umgebung der Anlage gefährlich hoch.

Beim mechanischen Mattieren wird pulverförmiges Korund und Druckluft durch eine stationäre oder bewegliche Düse auf die Glasoberfläche geblasen, wobei die Druckluftdüse und/oder der Glasgegenstand manuell oder mechanisch bewegt werden.

Obgleich dieses Verfahren meist in gekapselten Schutzräumen durchgeführt wird, konnten Emissionen von Feinststäuben und dadurch verursachte Silikoseerkrankungen der Bedienung nicht vermieden werden. Darüber hinaus verläuft der Mattiervorgang langsam und erfordert eine systematische Manipulation des Glaserzeugnisses.

Aufgabe der Erfindung ist es, ein Verfahren zum Mattieren von verschiedenartigen Glaserzeugnissen aufzuzeigen, bei dem zur Vermeidung der genannten Nachteile das Abrasionsmittel den Oberflächen des Glases unter Druck zugeführt wird.

Gemäß der Erfindung wird das Abrasionsmittel auf die Oberfläche des Glasgegenstandes in Form einer wäßrigen Suspension durch mindestens eine Düse mit einem Druck von 20 bis 400 MPa aufgespritzt. Zum Erzielen einer gleichförmigen Oberflächenrauhigkeit ist es vorteilhaft, den Suspensionsstrahl aus einer Entfernung von 50 mm bis 400 mm zur Glasoberfläche zuzuführen.

Zum gleichmäßigen Mattieren von rotationssymmetrischen Glaserzeugnissen sollte der Suspensionsstrahl gegen die Glasoberfläche des Gegenstandes in einem Bereich bis 180° in radialer Richtung zugeführt werden.

Bei dem sehr wirksamen Hochdruckabstrahlen mit Wasserstrahlen sollte das feinkörnige Abrasionsmittel einen Härtegrad von 3° bis 9° der Härteskala von Mohr besitzen.

Durch einen Hochdruck-Wasserstrahl als Träger des Abrasionsmittels ist die Geschwindigkeit des Mattiervorgangs gegenüber den bekannten Mattierverfahren mit Druckluft und betreffenden Abrasionsmitteln wesentlich höher. Das erfindungsgemäße Mattierverfahren kann vollautomatisch ablaufen und sichert ein homogenes Mattieren der ganzen Oberfläche. Dank den außerordentlich hohen Wasserdrücken können Abrasionsmittel mit geringerem Härtegrad eingesetzt werden, der sogar niedriger ist als der Härtegrad des Glases sein kann. Die Erfindung ermöglicht auch ein Mattieren der inneren Oberfläche des Glasproduktes, falls das Produkt eine genügend große Öffnung zum Einführen der Strahldüse aufweist. Beim Mattieren mittels einer Hochdruck-Wasserstrahlsuspension entstehen weder Stäube noch Dämpfe, welche die Bedienung gefährden und/oder die Umgebung ökologisch beeinträchtigen könnten. Die Suspension kann beliebig oft im Kreislauf wiederverwendet werden.

Ausführungsbeispiele des erfindungsgemäßen Verfahrens werden an zwei Beispielen näher beschrieben.

### Beispiel 1

Ein hohles Glasprodukt, z.B. ein hohlzylindrischer Beleuchtungskörper mit Struktural-Oberfläche und mit einer Öffnung mit einem Körperdurchmesser von 230 mm wird zum Mattieren seiner Außenfläche auf einer drehbaren Unterlage befestigt und um seine Achse mit einer Geschwindigkeit von 0,15 s$^{-1}$ gedreht. Als Abrasionsmittel wird ein Material auf der Basis von Perlit mit einer Mohr-Härte von 4 bis 5 und einer Korngröße 0,1 bis 1,5 mm eingesetzt. Dieses Abrasionsmittel wird mit Wasser gemischt und die Suspension mittels einer Düse unter einem Druck von 200 mPa ausgestrahlt. Der Suspensions strahl des Abrasionsmittels trifft aus einer Düse, deren Mündung die Oberfläche des Produktes kopiert, aus einer Entfernung von 250 ± 20 mm in radialer Richtung auf den Beleuchtungskörper in einem Bereich von 90° auf. Die Oberfläche des Beleuchtungskörpers wird gleichmäßig mit einer Oberflächenrauhigkeit mattiert, die der Rauheit des chemischen Mattierens entspricht. Das Mattieren dauert unter diesen Bedingungen etwa 150 s.

Beispiel 2

Ein kugelförmiger Beleuchtungskörper mit glatter Oberfläche und einem Durchmesser von 250 mm wird auf einer drehbaren Unterlage befestigt und um seine Achse mit einer Geschwindigkeit von 1,5 s$^{-1}$ verdreht. Als Abrasionsmittel wird ein Material auf der Basis von Kalkstein mit einer Mohr-Härte von 3° und einer Korngröße 0,1 bis 1,0 mm angewendet.

Das Abrasionsmittel wird mit Wasser gemischt und die erzielte Suspension wird aus einer Spaltdüse unter einem Druck von 320 MPa ausgestrahlt, deren Form die Kontur des Glaskörpers kopiert und deren Mündung von der Oberfläche des Glaskörpers 350 ± 30 mm radial entfernt ist. Der Strahlbereich beträgt 180°. Es wird ein homogenes Mattieren der Oberfläche des Beleuchtungskörpers mit einer Oberflächenrauheit erzielt, die dem Grad des chemischen Mattierens in einem Bad entspricht. Das Mattieren dauert unter diesen Bedingungen etwa 120 s.

Zur Erzielung besonderer Wirkungen können pulsierende Suspensionsstrahlen eingesetzt werden. Ferner kann die Suspension auch vorgegebene Anteile eines gas- oder dampfförmigen Mediums enthalten.

**Ansprüche**

1. Verfahren zum Mattieren von Glasgegenständen, insbesondere von hohlen Beleuchtungs-Glaskörpern, bei dem die Oberfläche des Gegenstandes mit einem feinkörnigen Abrasionsmittel unter Druck bestrahlt wird,
**dadurch gekennzeichnet,**
daß das Abrasionsmittel in Form einer wäßrigen Suspension unter einem Druck von 20 bis 400 MPa auf die Oberfläche des Glasgegenstandes aufgestrahlt wird.

2. Verfahren nach Anspruch 1, dadurch gekennzeichnet, daß die wäßrige Suspension aus einer Entfernung von 50 bis 400 mm auf die Oberfläche des Glasgegenstandes aufgestrahlt wird.

3. Verfahren nach Anspruch 1 oder 2, dadurch gekennzeichnet, daß der Strahl der wäßrigen Suspension in radialer Richtung in einem Bereich bis 180° zugeführt wird.

4. Verfahren nach Anspruch 1 bis 3, dadurch gekennzeichnet, daß das Abrasionsmittel einen Härtegrad 3 bis 9 der Härteskala von Mohr aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 460 621 (S. PEARLMAN) * Spalte 3, Zeile 59 - Spalte 4, Zeile 13; Patentansprüche * --- | 1-4 | C 03 C 19/00 B 24 C 1/06 |
| X | DE-C- 54 988 (J.E. MATHEWSON) * Patentanspruch; Seite 2, linke Spalte, Zeilen 27-31 * --- | 1,3 | |
| A | FR-A-2 513 624 (S.A. PRODUITS CERAMIQUES DE TOURAINE) * Patentansprüche 1,7 * ----- | 1 | |

**RECHERCHIERTE SACHGEBIETE (Int. Cl.5)**

C 03 C
B 24 C

Der vorliegende Recherchenbericht wurde für alle Patentansprüche erstellt

| Recherchenort | Abschlußdatum der Recherche | Prüfer |
|---|---|---|
| DEN HAAG | 07-06-1990 | BOUTRUCHE J.P.E. |